# FASCICULE DE BREVET EUROPEEN

(11) **EP 1 890 080 B1**
(45) Date de publication et mention de la délivrance du brevet: **29.09.2010**
(21) Numéro de dépôt: 07290855.1
(22) Date de dépôt: 06.07.2007
(51) Int. Cl.: F23G 5/02, F23G 5/027, F23G 5/04, F23G 5/20, F23G 5/30, F23G 7/02, F23G 7/10

(54) **Procédé de préparation d'une charge contenant de la biomasse en vue d'une gazeification ultèrieure**
Verfahren zur Herstellung eines Eintrags, der die Biomasse enthält, im Hinblick auf eine spätere Gaserzeugung
Method of preparing a load containing biomass with a view to subsequent gasification

(30) Priorité: 31.07.2006 FR 0607049
(43) Date de publication de la demande: 20.02.2008
(73) Titulaire: IFP, 92852 Rueil-Malmaison Cédex (FR)
(72) Inventeur: Lemaire, Eric, 69480 Anse (FR); Boudet, Nicolas, 69360 Chaponost (FR)

(56) Documents cités:
- WO-A-86/06930
- CH-A- 228 877
- GB-A- 944 282
- US-A1- 2003 221 363

## Description

### DOMAINE DE L'INVENTION

La présente invention concerne un procédé de préparation d'une charge contenant de la matière fibreuse lignocellulosique, seule ou en mélange avec une coupe hydrocarbonée en vue d'alimenter une unité de gazéification. L'unité de gazéification produit un gaz contenant essentiellement du monoxyde de carbone et de l'hydrogène, connu de l'homme du métier sous le nom de gaz de synthèse (synthesis gas ou syngas selon la terminologie anglosaxonne). Le gaz de synthèse permet ensuite de recomposer un ensemble de coupes hydrocarbures, notamment une coupe essence et une coupe gazole au moyen de la synthèse Fischer-Tropsch. Le gaz de synthèse peut également être utilisé comme vecteur en vue de la production d'énergie, ou comme matière première pour la production de bases pour la chimie et la pétrochimie.

La présente invention n'est pas liée à une utilisation particulière du gaz de synthèse, mais une des applications importante de la présente invention se situe dans la chaîne de production d'hydrocarbures de synthèse, notamment des essences et du gazole, à partir d'une matière première constituée au moins en partie de biomasse, plus précisément de biomasse de type lignocellulosique dont un exemple sont les copeaux de bois. On peut citer également les déchets de type paille ou bagasse de canne à sucre ou tout autre type de résidus ligneux.

Dans la suite du texte, nous utiliserons comme exemple typique de charge lignocellulosique des copeaux de bois résultant d'un déchiquetage préalable. L'étape de déchiquetage ne fait pas partie de la présente invention, mais peut en cas de besoin lui être ajouté en amont.

Ces copeaux de bois sont généralement livrés sous la forme de particules de quelques centimètres, et pouvant contenir jusqu'à 40 % d'eau.

La présente invention permet d'optimiser le conditionnement de la matière première en vue de son traitement ultérieur dans une unité de gazéification, plus particulièrement une unité de gazéification en lit entraîné qui nécessite une taille de particules en entrée relativement bien calibrée.

Ce conditionnement comprend une réduction de taille jusqu'à atteindre la gamme de taille convenant au traitement dans une unité de gazéification en lit entraîné, mais aussi la constitution d'un mélange de ladite charge avec une coupe hydrocarbonée en vue de constituer une suspension de particules de biomasse lignocellulosique dispersée dans ladite coupe hydrocarbure, ladite suspension de fines particules solides dans un liquide est également parfois appelée "slurry" selon la terminologie anglo-saxonne. Par soucis de simplification ont utilisera le terme de suspension dans la suite du texte.

La suspension ainsi formée pourra également comprendre en plus des particules solides de biomasse, d'autres particules solides de granulométrie appropriée, telles que des particules de coke de pétrole ou des particules de charbon. La constitution d'une suspension de particules de biomasse, éventuellement en mélange avec d'autres particules dans une coupe pétrolière, fait également partie intégrante de la présente invention.

### EXAMEN DE L'ART ANTERIEUR

L'homme du métier connaît des procédés de thermolyse opérant à des températures d'environ 250°C et des temps de séjour de l'ordre de quelques minutes en vue de préparer une charge de type biomasse lignocellulosique pour être traité dans des procédés en lit fluidisé ou entraîné, et notamment dans une unité de gazéification à lit entraîné. La thermolyse douce, ou torréfaction, modifie la structure de la biomasse de telle manière que les opérations ultérieures de broyage s'en trouvent facilitées, ainsi que la forme finale des particules solides obtenues qui se rapprochent de particules sphériques.

Un des objets de la présente invention est de préciser les valeurs de certains paramètres permettant le dimensionnement optimal d'un four de torréfaction adapté au traitement de la biomasse.

Le brevet FR 2 678 850 de la demanderesse décrit un four de pyrolyse adapté au traitement des déchets d'ordure ménagère. La matière entrant dans un tel four est de composition chimique et de densité assez différente de celle de la matière lignocellulosique concerné par la présente invention. En effet, comme le montre le tableau comparatif ci joint, les déchets d'ordure ménagère présentent une teneur en oxygène notablement plus faible que celle des déchets végétaux, et par ailleurs, une teneur en cendres de l'ordre de 30 % poids, alors que les déchets végétaux ne présentent pas de cendres.

**composition et PCI type d'un bois et d'un échantillon d'ordures ménagères**

| | **BOIS (sec)** | **Ordures Ménagères (sèches)** |
|---|---|---|
| **C** (% masse) | **49.5** | **36.9** |
| **H** (% masse) | **6** | **5.3** |
| **O** (% masse) | **43** | **24.6** |
| **N** (% masse) | **0.5** | **0.9** |
| **S** (% masse) | **>0.1** | **0.3** |
| **Cl** (% masse) | **0** | **1.6** |
| **Cendres** (% masse) | **1** | **30.4** |
| **PCl** (MJ/kg) | **18** | **14.8** |

Le brevet US 4,787,917 décrit un procédé de torréfaction de bois à une température comprise entre 250°C et 280°C de manière à délivrer des bâtonnets de longueur comprise entre 5 et 20 mm. La demande de brevet US 2003/221363 décrit un procédé de torréfaction de déchets issus de la biomasse dans lequel après torréfaction lesdits déchets sont broyés puis densifiés afin de former des granules. Le procédé selon la présente invention délivre des particules de taille inférieures à 200 microns permettant d'aboutir à la constitution d'une suspension.

### DESCRIPTION SOMMAIRE DES FIGURES

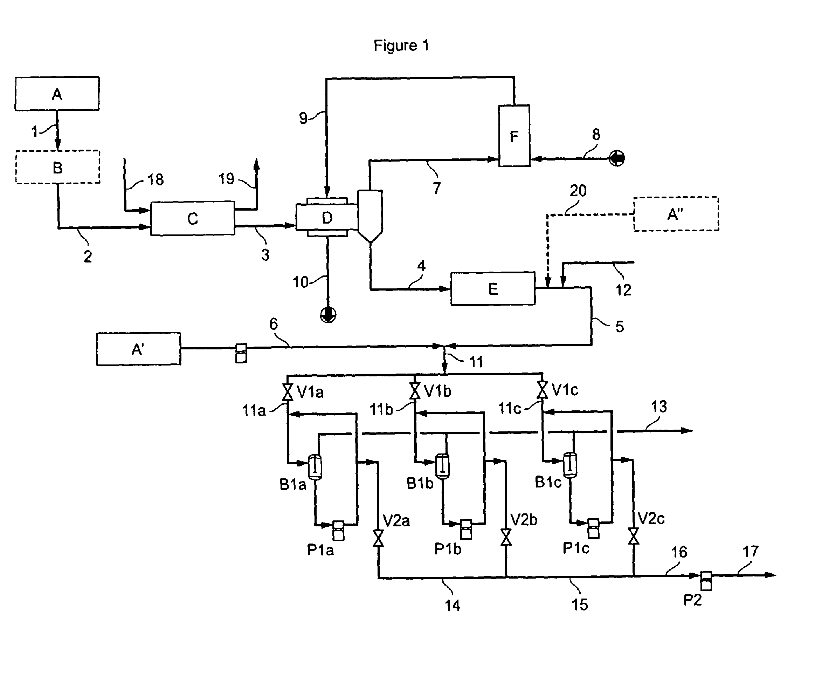

La figure 1 est un schéma du procédé de prétraitement selon l'invention qui sert de support à la description détaillée ci après. Les lignes marquées en pointillé correspondent à des éléments non obligatoires.

### DESCRIPTION SOMMAIRE DE L'INVENTION

La présente invention concerne un procédé de prétraitement d'une charge contenant au moins de la matière lignocellulosique en vue de son traitement ultérieur dans une unité de gazéification.

La matière première est constituée de déchets végétaux de type lignocellulosique tels que des copeaux de divers essences de bois. Cette matière première peut-être disponible à l'état de copeaux de dimension typique comprise entre 0,5 cm et 2 cm, et avec une teneur en eau comprise entre 10 % et 40 % poids.

La première étape du procédé selon l'invention est un séchage réalisé à une température inférieure à 250°C, de préférence inférieure à 200°C, permettant d'arriver à une teneur en eau de la biomasse à traiter d'environ 10 % poids, et limitant ainsi l'émission de COV dans les vapeurs produites.

Le prétraitement consiste ensuite en une pyrolyse douce appelée dans la suite du texte torréfaction, réalisée dans un four de torréfaction qui délivre une matière lignocellulosique modifiée dans sa structure, et qui est envoyée ensuite dans une unité de broyage.

L'opération de torréfaction s'accompagne d'un séchage qui produit une biomasse ayant une teneur en eau comprise entre 2% et 4% poids, et qui, du fait des modifications de structure, est devenu hydrophobe. Cette propriété est intéressante dans la mesure où elle prévient toute augmentation ultérieure de la teneur en eau de la biomasse prétraitée.

De plus, l'opération ultérieure de gazéification peut nécessiter un apport d'eau (pour limiter la formation de suies), et il est alors préférable que cette eau soit apportée de l'extérieur et ne provienne pas de la biomasse elle même. En effet, il est connu que la biomasse est d'autant plus réactive qu'elle possède un taux d'humidité faible. Il est donc particulièrement intéressant d'introduire dans l'unité de gazéification une biomasse avec une teneur en eau aussi faible que possible.

Les particules de biomasse issues de l'étape de torréfaction sont ensuite envoyées dans une étape de broyage qui permet d'atteindre la granulométrie souhaitée en vue de la gazéification ultérieure. L'étape de broyage est considérablement facilitée par l'étape de torréfaction qui permet de réduire la consommation énergétique d'au moins 60 % par rapport à un broyage sans torréfaction préalable.

Quelques exemples non limitatifs de matière biomasse lignocellulosique sont donnés ci dessous:
- Résidus d'exploitation agricole (paille...)
- Résidus d'exploitation forestière (produits résultants de la première éclaircie des forêts)
- Produits de l'exploitation forestière
- Cultures dédiées (taillis à courte rotation)

Le procédé de prétraitement de matière de type biomasse lignocellulosique selon la présente invention suppose que la biomasse soit disponible en copeaux de taille comprise entre 0,5 et 2 cm. Une étape de broyage primaire ou de déchiquetage optionnelle est éventuellement nécessaire pour atteindre ladite taille de copeaux.

Le procédé de prétraitement de matière de type biomasse lignocellulosique selon la présente invention comprend donc au moins les étapes suivantes:
b) une étape de séchage primaire réalisée à une température inférieure à 250°C, voir inférieure à 200 °C,
c) une étape de torréfaction de la matière issue de l'étape b), ladite torréfaction est réalisée à une température comprise entre 250°C et 320°C et préférentiellement entre 270°C et 300°C, avec un temps de séjour compris entre 10 et 40 minutes, préférentiellement compris entre 15 et 30 minutes,
d) une étape de broyage de la matière issue de l'étape c) permettant de délivrer des particules de biomasse dont le diamètre est inférieur à 200 microns, et préférentiellement inférieur à 100 microns,
e) une étape de constitution d'une suspension consistant en une suspension de particules de biomasse issues de l'étape de broyage précédente, éventuellement en mélange avec d'autres particules hydrocarbonées solides, dans une coupe hydrocarbonée liquide, ladite suspension comportant entre 30% et 80% en masse de particules solides et préférentiellement de 40% à 70% .

Ledit procédé peut comprendre en outre, avant l'étape de séchage primaire, une étape de broyage ou déchiquetage de ladite matière en copeaux de taille comprise entre 0,5cm et 2 cm.

Dans le cas d'une suspension constitué d'un mélange de particules de biomasse et d'autres particules telles que des particules de coke de pétrole, les proportions entre les différents types de particules pourront être quelconques, avec toutefois au moins 5% poids de particules de type biomasse dans le mélange.

La coupe hydrocarbure utilisée pour l'étape de constitution de la suspension pourra être une coupe dite résidu sous vide, ou une coupe issue d'une unité de craquage catalytique, ou même plus généralement une coupe hydrocarbonée qui peut être pompée aux conditions de stockage standards. La coupe hydrocarbure permettant de constituer ladite suspension peut également être un mélange, en proportion quelconque, des diverses coupes citées. Il s'agit préférentiellement de coupes "lourdes", au sens où leur point d'ébullition initial est de préférence supérieur à 350°C.

La suspension ainsi constituée pourra être utilisé comme charge d'alimentation d'une unité de gazéification en lit entraîné en vue de produire un gaz de synthèse.

### DESCRIPTION DETAILLEE DE L'INVENTION

Dans cette partie du texte nous donnons une description d'un mode de réalisation du procédé selon l'invention au moyen de la figure 1. Sur cette figure, les éléments facultatifs apparaissent en pointillé .

La charge lignocellulosique A (flux 1) subit une étape optionnelle de broyage grossier, ou déchiquetage, dans le broyeur primaire (B) optionnel qui amène éventuellement la taille des particules de biomasse à des valeurs comprises entre 0,5 et 2 cm. En sortie de cette étape de déchiquetage, le charge alimente l'unité de séchage C (flux 2).

L'objectif de l'unité de séchage C est de réduire l'humidité de la charge pour obtenir une teneur en eau de ladite charge inférieure à 20% poids, et préférentiellement inférieure à 10 % poids.

A titre d'exemple, une des technologies de séchage les plus efficaces pour le type de charge envisagé est le séchage convectif par échange direct avec un gaz chaud, ledit gaz chaud peut être de l'air préchauffé ou des fumées de combustion. Dans cette technologie, l'unité de séchage C est donc alimentée par la charge à sécher (flux 2) et le gaz chaud (18) dont la température doit rester inférieure à 250°C pour éviter tout risque d'incendie dans le sécheur. Le flux de charge séchée (flux 3) alimente l'unité de torréfaction (D).

Le flux gazeux utilisé pour l'opération de séchage (18) est refroidi lors du séchage et se charge en vapeur d'eau (correspondant à la quantité d'eau éliminée dans la charge biomasse), et en quelques composés organiques volatiles (COV) et composés inorganiques entraînés (CIE). Ce flux (19) est généralement rejeté à l'atmosphère. Dans le cas où le flux (18) est constitué d'air chaud, le flux (19) peut être envoyé comme air comburant dans la chambre de combustion (F).

Dans le four de torréfaction (D) la charge est portée à une température comprise entre 250°C et 320°C, le temps de séjour dans le four étant compris entre 10 et 40 minutes et préférentiellement entre 15 et 30 minutes.

Le four de torréfaction (D) est de préférence un four tournant cylindrique, chauffé au moyen d'une double enveloppe dans laquelle circulent des fumées chaudes (flux 9).

Le four tournant aura préférentiellement un rapport longueur sur diamètre inférieur à 10, et de manière encore préférée un rapport longueur sur diamètre compris entre 3 et 8.

Le régime d'écoulement de la biomasse à l'intérieur du four tournant est préférentiellement le régime dit de roulement ("rolling" selon la terminologie anglosaxonne) caractérisé par une surface plane de la couche de biomasse, ladite surface ayant un angle d'inclinaison par rapport à l'horizontale supérieur ou égal à l'angle de repos dynamique. L'angle d'inclinaison de la surface de la biomasse à l'intérieur du four de torréfaction est préférentiellement au plus de 10 degré supérieur à l'angle de repos dynamique et plus préférentiellement au plus de 5 degrés supérieur à l'angle de repos dynamique.

Cette caractéristique correspond généralement à une vitesse de rotation du four comprise entre 0,5 et 10 tours par minute, et préférentiellement comprise entre 1 et 5 tours par minute.

L'angle de repos dynamique d'une couche de solide granulaire est défini comme l'angle à partir duquel les particules situées à la partie supérieure de la couche de solide considéré, commencent à rouler le long de la surface de la dite couche.

L'opération de torréfaction produit un flux de biomasse sec (flux 4) dont le taux d' humidité résiduelle est de l'ordre de 3% poids, hydrophobe et facilement broyable.

L'étape de torréfaction génère aussi un flux gazeux issu de la biomasse elle même, qui est extrait à la sortie du four (flux 7), comprenant notamment de l'eau, du dioxyde de carbone, du monoxyde de carbone, et une grande variété de composés organiques oxygénés (tels que méthanol, acide formique, acide lactique, furfural, hydroxyl acétone).

Le flux gazeux (7) est brûlé dans une chambre de combustion (F) utilisant un flux d'air comme comburant (flux 8). Les fumées chaudes (flux 9) issues de la chambre de combustion (F) entrent dans la double enveloppe du four de torréfaction (D) pour fournir la puissance thermique nécessaire au four. En sortie de la double enveloppe, les fumées refroidies sont rejetées à l'atmosphère (flux 10).

La biomasse torréfiée (flux 4) est ensuite broyée dans un broyeur final (E) qui permet de délivrer, moyennant un faible coût énergétique, une charge biomasse sous forme de particules inférieures à 200 microns, et préférentiellement inférieure à 100 microns (flux 5), permettant la constitution d'une suspension adaptée à constituer la charge d'une unité de gazéification en lit entraîné (non indiqué sur la figure 1).

La constitution d'une suspension (17) consiste à obtenir un mélange homogène des particules de biomasse (flux 5) en suspension dans une coupe hydrocarbonée liquide de type résidu sous vide (RSV) pompée à partir d'un stockage A' (flux 6).

La biomasse torréfiée et broyée (flux 5) est convoyée du broyeur (E) vers la zone de préparation de la suspension par un système de transport pneumatique avec de l'azote (flux 12).

Le système de préparation de la suspension est constitué de 3 bacs agités (B1a, B1b et B1c) en parallèle munis chacun d'une pompe de recirculation (P1a, P1b et P1c).

Le flux 5 et le flux 6 sont d'abord mélangés grossièrement pour constituer le flux 11.

Ce flux (11) est ensuite envoyé vers l'un des trois bacs, par exemple B1a, la vanne V1 a étant ouverte et V2a fermée. Dans le même temps, un des bacs est isolé, par exemple B1b, grâce aux vannes V1 b et V2b qui sont fermées.

La pompe P1 b en fonctionnement permet l'homogénéisation du solide et du liquide contenu dan le bac B1b. En effet, une bonne homogénéité de la charge est primordiale lors de son injection dans les brûleurs de l'unité de gazéification. Pour ce faire la pompe P1 b fonctionne de préférence avec un débit permettant la circulation d'au moins 3 fois et de manière plus préférée d'au moins environ 5 fois le volume du ballon B1b par heure.

Enfin dans le même temps, le ballon B1c alimente l'unité de gazéification grâce à la pompe P2, la pompe P1 c étant toujours en fonctionnement, la vanne V1 c étant fermée et V2c ouverte.

Ce système permet donc d'avoir en permanence un premier ballon en mode remplissage, un second ballon en mode homogénéisation et un troisième ballon en mode alimentation de l'unité de gazéification. En effet, lorsque le ballon en mode alimentation est vide, il est remplacé par le ballon qui était en mode homogénéisation dans la période précédente, lequel est remplacé par le ballon qui était en mode chargement. Le ballon en mode alimentation vide se retrouve en position de chargement.

On notera enfin que les ballons sont munis d'un dégazage pour permettre l'élimination de l'azote de convoyage du solide (flux 13).

La suspension peut éventuellement comporter en plus des particules de biomasse d'autres types de particules telles que, par exemple, des particules de coke de pétrole ou des particules de charbon. Nous parlerons à titre d'exemple de particules de coke de pétrole.

Le flux de particules de coke de pétrole (flux 20) est extrait de son stockage (capacité A") puis il est mélangé avec le flux de particules de biomasse juste avant le convoyage par l'azote.

La suite du schéma est identique au schéma utilisant uniquement les particules de biomasse comme solide.

La suspension ainsi constituée, soit uniquement à partir de particules de biomasse, soit en mélange avec d'autres particules solide telles que des particules de coke ou même de charbon, a une teneur globale en particules solides qui représente de 30 % à 70 % poids.

## Revendications

1. Procédé de prétraitement de matière de type biomasse lignocellulosique comprenant au moins les étapes suivantes:
b) une étape de séchage primaire réalisée à une température inférieure à 250°C,
c) une étape de torréfaction de la matière issue de l'étape b), ladite torréfaction est réalisée à une température comprise entre 250°C et 320°C , avec un temps de séjour compris entre 10 et 40 minutes,
d) une étape de broyage de la matière issue de l'étape c) permettant de délivrer des particules de biomasse dont le diamètre est inférieur à 200 microns,
e) une étape de constitution d'une suspension de particules de biomasse issues de l'étape de broyage, et éventuellement d'autres particules hydrocarbonées solides, dans une coupe hydrocarbonée liquide, ladite suspension comportant de 30 à 80 % poids de particules solides .

2. Procédé de prétraitement selon la revendication 1 comprenant en outre, avant l'étape de séchage primaire, une étape a) de broyage ou déchiquetage de ladite matière en copeaux de taille comprise entre 0,5cm et 2 cm.

3. Procédé de prétraitement selon l'une des revendications précédentes dans lequel l'étape de torréfaction est réalisée à une température comprise entre 270°C et 300°C avec un temps de séjour compris entre 15 et 30 minutes.

4. Procédé de prétraitement selon l'une des revendications précédentes dans lequel l'étape de torréfaction est réalisée dans un four tournant de rapport longueur sur diamètre inférieur à 10, et préférentiellement compris entre 3 et 8.

5. Procédé de prétraitement selon l'une des revendications précédentes dans lequel l'étape de broyage délivre des particules de biomasse dont le diamètre est inférieur à 100 microns.

6. Procédé de prétraitement selon l'une des revendications précédentes dans lequel l'étape de torréfaction est réalisée dans un four tournant dont la vitesse de rotation est comprise entre 0,5 tours /minute et 10 tours /minute, et préférentiellement comprise entre 1 et 5 tours /minute.

7. Procédé de prétraitement selon l'une des revendications précédentes dans lequel la coupe hydrocarbure utilisée pour l'étape de constitution de la suspension est une coupe dite résidu sous vide ou une coupe issue d'une unité de craquage catalytique, ou un mélange quelconque des dites coupes.

8. Procédé de prétraitement selon l'une des revendications précédentes dans lequel la suspension comporte de 40% à 70% poids de particules solide.

9. Procédé de prétraitement selon l'une des revendications précédentes dans lequel la suspension est constituée à la fois de particules de biomasse et de particules de coke de pétrole dans des proportions quelconques avec au moins 5% poids de particules de biomasse dans le mélange.

10. Procédé de prétraitement selon l'une des revendications précédentes dans lequel l'étape de constitution de la suspension est réalisée à partir de 3 bacs de stockage fonctionnant tour à tour, le premier en mode chargement, le second en mode homogénéisation, et le troisième en mode alimentation de l'unité de gazéification.

11. Utilisation de la biomasse issue du procédé de prétraitement selon l'une des revendications précédentes comme charge pour une unité de gazéification en lit entraîné en vue de produire un gaz de synthèse.

## Claims

1. A process for pre-treatment of lignocellulosic biomass type material, comprising at least the following steps:
b) a primary drying step carried out at a temperature of less than 250°C;
c) a step for torrefaction of the material from step b), said torrefaction being carried out at a temperature in the range 250°C to 320°C, with a residence time in the range 10 to 40 minutes;
d) a step for milling the material from step c) to produce biomass particles with a diameter of less than 200 microns;
e) a step for constituting a suspension of biomass particles from the milling step and optionally other solid hydrocarbon particles, in a liquid hydrocarbon cut, said suspension comprising 30% to 80% by weight of solid particles.

2. A pre-treatment process according to claim 1, further comprising, before the primary drying step, a step a) for milling or shredding said material into chips in the range 0.5 cm to 2 cm in size.

3. A pre-treatment process according to any one of the preceding claims, in which the torrefaction step is carried out at a temperature in the range 270°C to 300°C with a residence time in the range 15 to 30 minutes.

4. A pre-treatment process according to any one of the preceding claims, in which the torrefaction step is carried out in a rotary furnace with a length to diameter ratio of less than 10, preferably in the range 3 to 8.

5. A pre-treatment process according to any one of the preceding claims, in which the milling step delivers biomass particles with a diameter of less than 100 microns.

6. A pre-treatment process according to any one of the preceding claims, in which the torrefaction step is carried out in a rotary furnace the rotation rate of which is in the range 0.5 rpm to 10 rpm, preferably in the range 1 to 5 rpm.

7. A pre-treatment process according to any one of the preceding claims, in which the hydrocarbon cut used for the suspension constitution step is a vacuum residue cut or a cut derived from a catalytic cracking unit or any mixture of said cuts.

8. A pre-treatment process according to one of the preceding claims, in which the suspension comprises 40% to 70% by weight of solid particles.

9. A pre-treatment process according to any one of the preceding claims, in which the suspension is constituted both by particles of biomass and particles of oil coke in any proportions with at least 5% by weight of particles of biomass in the mixture.

10. A pre-treatment process according to any one of the preceding claims, in which the suspension constitution step is carried out from 3 storage tanks functioning in turns, the first in charging mode, the second in homogenization mode, and the third in gasification unit supply mode.

11. Use of biomass from a pre-treatment process according to any one of the preceding claims, as a feed for an entrained bed gasification unit for the production of synthesis gas.

## Patentansprüche

1. Verfahren zur Vorbehandlung von Material vom Typ lignocellulosehaltige Biomasse, das mindestens die folgenden Schritte umfasst:
b) einen ersten Trocknungsschritt, der bei einer Temperatur von weniger als 250 °C ausgeführt wird,
c) einen Schritt zur Dörrung des Materials, das aus Schritt b) stammt, wobei die Dörrung bei einer Temperatur in Bereich zwischen 250 °C und 320 °C mit einer Verweildauer im Bereich zwischen 10 und 40 Minuten ausgeführt wird,
d) einen Schritt zur Zerkleinerung des Materials, das aus Schritt c) stammt, der es ermöglicht, Biomassepartikel bereitzustellen, deren Durchmesser kleiner als 200 Mikron ist,
e) einen Schritt zur Bildung einer Suspension aus Biomassepartikeln, die aus dem Zerkleinerungsschritt stammen, und gegebenenfalls anderer fester Kohlenwasserstoffpartikel in einem flüssigen Kohlenwasserstoffschnitt, wobei die Suspension 30 bis 80 Gew.-% feste Partikel umfasst.

2. Verfahren zur Vorbehandlung nach Anspruch 1, das ferner vor dem ersten Trocknungsschritt einen Schritt a) zum Zerkleinern oder Zerhacken des Materials in Späne mit einer Größe im Bereich zwischen 0,5 cm und 2 cm umfasst.

3. Verfahren zur Vorbehandlung nach einem der vorhergehenden Ansprüche, wobei der Schritt der Dörrung bei einer Temperatur im Bereich zwischen 270 °C und 300 °C mit einer Verweildauer im Bereich zwischen 15 und 30 Minuten ausgeführt wird.

4. Verfahren zur Vorbehandlung nach einem der vorhergehenden Ansprüche, wobei der Schritt der Dörrung in einem Drehofen mit einem Verhältnis von Länge zu Durchmesser kleiner als 10, und vorzugsweise im Bereich zwischen 3 und 8 ausgeführt wird.

5. Verfahren zur Vorbehandlung nach einem der vorhergehenden Ansprüche, wobei der Schritt des Zerkleinerns Biomassepartikel bereitstellt, deren Durchmesser kleiner als 100 Mikron ist.

6. Verfahren zur Vorbehandlung nach einem der vorhergehenden Ansprüche, wobei der Schritt der Dörrung in einem Drehofen ausgeführt wird, dessen Drehgeschwindigkeit im Bereich zwischen 0,5 Umdrehungen/Minute und 10 Umdrehungen/Minute und vorzugsweise im Bereich zwischen 1 und 5 Umdrehungen/Minute liegt.

7. Verfahren zur Vorbehandlung nach einem der vorhergehenden Ansprüche, wobei der für den Schritt zur Bildung der Suspension verwendete Kohlenwasserstoffschnitt ein Vakuumrückstand genannter Schnitt oder ein Schnitt, der aus einer Einheit zum katalytischen Cracken stammt, oder ein beliebiges Gemisch aus diesen Schnitten ist.

8. Verfahren zur Vorbehandlung nach einem der vorhergehenden Ansprüche, wobei die Suspension 40 Gew.-% bis 70 Gew.-% fester Partikel umfasst.

9. Verfahren zur Vorbehandlung nach einem der vorhergehenden Ansprüche, wobei die Suspension gleichzeitig aus Biomassepartikeln und Petrolkokspartikeln in beliebigen Anteilen mit mindestens 5 Gew.-% Biomassepartikeln in dem Gemisch gebildet wird.

10. Verfahren zur Vorbehandlung nach einem der vorhergehenden Ansprüche, wobei der Schritt zur Bildung der Suspension ausgehend von 3 Lagertanks ausgeführt wird, die abwechselnd arbeiten, der erste im Beschickungsmodus, der zweite im Homogenisierungsmodus und der dritte im Modus zur Versorgung der Vergasungseinheit.

11. Verwendung der Biomasse, die aus dem Verfahren zur Vorbehandlung nach einem der vorhergehenden Ansprüche stammt, als Beschickung für eine Flugstaubvergasungseinheit, um ein Synthesegas zu produzieren.
